# EUROPÄISCHE PATENTSCHRIFT

(11) **EP 3 034 890 B1**
(45) Veröffentlichungstag und Bekanntmachung des Hinweises auf die Patenterteilung: **12.06.2019**
(21) Anmeldenummer: 14198696.8
(22) Anmeldetag: 17.12.2014
(51) Int. Cl.: F15B 13/04, F15B 13/044, E05F 15/00, E05F 15/50, F16K 31/06, E05F 3/22

(54) **Hydraulikventil und Antriebssteuereinheit, umfassend ein derartiges Hydraulikventil**
Hydraulic valve and drive control unit, comprising such a hydraulic valve
Soupape hydraulique et unité de commande d'entraînement comprenant une telle soupape hydraulique

(43) Veröffentlichungstag der Anmeldung: 22.06.2016
(73) Patentinhaber: dormakaba Deutschland GmbH, 58256 Ennepetal (DE)
(72) Erfinder: Bienek, Volker, 58256 Ennepetal (DE); Wildförster, Thomas, 58256 Ennepetal (DE)
(74) Vertreter: Balder IP Law, S.L.

(56) Entgegenhaltungen:
- EP-A2- 2 690 327
- DE-A1-102011 078 396
- DE-T2- 69 213 781

## Beschreibung

Die Erfindung betrifft ein Hydraulikventil, das insbesondere für Türantriebe verwendbar ist. Weiterhin betrifft die Erfindung eine Antriebssteuereinheit, die ein derartiges Hydraulikventil umfasst.

Aus dem Stand der Technik sind hydraulische Türantriebe bekannt. Bei diesen wird eine Tür dadurch bewegt, dass ein Kolben durch die Aufbringung eines Hydraulikdrucks verschoben wird. Die Bewegung des Kolbens kann anschließend in eine Drehbewegung, beispielsweise über ein Zahnstangengetriebe oder über einen Nockentrieb, umgewandelt werden. Mit der Drehbewegung ist eine Drehtür über ein zusätzliches Hebelgestänge antreibbar.

Derartige Hydraulikantriebe, wie sie beispielsweise aus DE69213781T2 bekannt sind, haben jedoch den Nachteil, dass diese eine Tür lediglich in eine Richtung antreiben können. So werden Hydraulikantriebe üblicherweise zum Öffnen von Türen verwendet, während das Schließen ein passiver Türschließer übernimmt. Das aktive Schließen ist somit nicht, oder zumindest für eine Kollisionsvermeidung nicht schnell genug, möglich.

Es ist Aufgabe der vorliegenden Erfindung, ein Hydraulikventil, insbesondere für einen Türantrieb, bereitzustellen, das bei einfacher und kostengünstiger Herstellung und Montage einen sicheren, zuverlässigen und flexiblen Betrieb, insbesondere bei Verwendung in einem Türantrieb, erlaubt.

Die Lösung dieser Aufgabe erfolgt durch die Merkmale des Anspruchs 1. Somit wird die Aufgabe gelöst durch ein Hydraulikventil mit einem ersten Ventil, einem zweiten Ventil, einer Niederdruckleitung und einer Hochdruckleitung. Das erste Ventil und/oder das zweite Ventil sind insbesondere Sitzventile, besonders bevorzugt Doppelsitzventile. Weiterhin weist das Hydraulikventil zumindest eine erste Ausgangsleitung und zumindest eine zweite Ausgangsleitung auf. Das erste Ventil weist einen ersten Ventilsitz und einen zweiten Ventilsitz auf, wobei der erste Ventilsitz und der zweite Ventilsitz durch ein erstes Verschlussteil wechselweise verschließbar sind. In jedem Fall ist somit zumindest einer der Ventilsitze, d. h., entweder der erste Ventilsitz oder der zweite Ventilsitz geöffnet. Der jeweils geöffnete Ventilsitz ist dann mit der ersten Ausgangsleitung hydraulisch verbunden. Ein Umschalten des ersten Ventils durch Bewegen, insbesondere durch Verschieben, des ersten Verschlussteils von einem Ventilsitz zu dem anderen Ventilsitz bewirkt somit, dass die hydraulische Verbindung der ersten Ausgangsleitung wechselweise zu dem ersten Ventilsitz oder dem zweiten Ventilsitz umschaltbar ist. Ebenso weist das zweite Ventil einen dritten Ventilsitz und einen vierten Ventilsitz auf. Wiederum sind der dritte Ventilsitz und der vierte Ventilsitz durch ein zweites Verschlussteil wechselweise verschließbar. Durch ein Verschließen des dritten Ventilsitzes oder des vierten Ventilsitzes ist der jeweils andere Ventilsitz, d. h. der vierte Ventilsitz oder der dritte Ventilsitz geöffnet. Der geöffnete Ventilsitz des zweiten Ventils ist mit der zweiten Ausgangsleitung hydraulisch verbunden. Somit ist mit dem zweiten Ventil die zweite Ausgangsleitung wahlweise mit dem dritten Ventilsitz oder dem vierten Ventilsitz hydraulisch verbindbar. Weiterhin ist die Hochdruckleitung mit dem ersten Ventilsitz und mit dem dritten Ventilsitz verbunden, während die Niederdruckleitung mit dem zweiten Ventilsitz und dem vierten Ventilsitz verbunden ist. Dieses bedeutet, dass die erste Ausgangsleitung durch das erste Ventil wahlweise mit der Hochdruckleitung oder der Niederdruckleitung verbindbar ist. Gleiches gilt für die zweite Ausgangsleitung. So ist die zweite Ausgangsleitung durch das zweite Ventil wahlweise mit der Hochdruckleitung oder der Niederdruckleitung verbindbar. Somit sind mit dem erfindungsgemäßen Hydraulikventil zwei Ausgangsleitungen abhängig voneinander schaltbar. Durch das erste Ventil und das zweite Ventil sind die erste Ausgangsleitung und die zweite Ausgangsleitung jeweils wahlweise mit einem hohen Druck oder einem geringen Druck beaufschlagbar. Damit ist das Hydraulikventil vorteilhafterweise für einen Türantrieb verwendbar, da zwei Druckkammern des Türantriebs unabhängig voneinander mit Hydraulikdruck beaufschlagt werden können. Diese beiden Druckkammern können insbesondere je eine Druckkammer zum Antrieb und eine Druckkammer zum Bremsen einer Tür sein. Zumindest ist die Tür somit aktiv in zwei Richtungen bewegbar. Das erfindungsgemäße Hydraulikventil umfasst außerdem einen Kolben, wobei mit dem Kolben das zweite Verschlussteil betätigbar ist. Der Kolben ist in einer Druckkammer angeordnet und teilt die Druckkammer in einen ersten Kammerbereich und einen zweiten Kammerbereich. Der erste Kammerbereich ist mit der ersten Ausgangsleitung verbunden, während der zweite Kammerbereich mit dem vierten Ventilsitz verbunden ist. Somit ist der zweite Kammerbereich insbesondere mit der Niederdruckleitung verbunden. Durch einen derartigen Aufbau findet eine automatische Umschaltung des zweiten Ventils statt, wenn der Druck in der ersten Ausgangsleitung von einem hohen Druck auf einen niederen Druck und umgekehrt umgeschaltet wird. Auf diese Weise nimmt das zweite Ventil automatisch stets eine Stellung ein, mit der ein Druck in der zweiten Ausgangsleitung das Gegenteil des Drucks in der ersten Ausgangsleitung ist. Dies bedeutet, dass in dem Fall, in dem an der ersten Ausgangsleitung ein hoher Druck anliegt, in der zweiten Ausgangsleitung ein niedriger Druck anliegt und umgekehrt. Somit erlaubt das erfindungsgemäße Hydraulikventil auf vorteilhafte Weise, dass lediglich die erste Ausgangsleitung durch das erste Ventil geschaltet werden muss, während sich die zweite Ausgangsleitung durch das zweite Ventil automatisch an die Gegebenheiten in der ersten Ausgangsleitung anpasst. Auf diese Weise ist sichergestellt, dass nicht ein derartiger Fall auftreten kann, in dem sowohl die erste Ausgangsleitung als auch die zweite Ausgangsleitung einen hohen Druck oder einen niedrigen Druck aufweisen. Fehlfunktionen des Hydraulikventils sind damit vermieden. Das erfindungsgemäße Hydraulikventil erlaubt insbesondere kleine Volumenströme unter hohem Druckniveau zu schalten. Außerdem wird durch die Ausgestaltung des ersten Ventils und des zweiten Ventils, insbesondere als Sitzventile oder Doppelsitzventile, eine hohe Leckagedichtigkeit gewährleistet. Dies erlaubt insbesondere eine Offenhaltefunktion für Türen zu realisieren, wenn das Hydraulikventil in einem Türantrieb verwendet wird. Durch die Leckagedichtung ist eine maximale Abweichung der Tür aus der zu haltenden Position um maximal 2° pro 48 sichergestellt.

Die Unteransprüche haben vorteilhafte Weiterbildungen der Erfindung zum Inhalt.

Das Hydraulikventil zeichnet sich bevorzugt dadurch aus, dass das erste Verschlussteil von einem Elektromagneten betätigbar ist. Somit ist das erste Ventil bevorzugt ein Magnetventil, das somit insbesondere durch einen Benutzer oder eine Steuerungslogik umschaltbar ist. Wie zuvor bereits beschrieben, bewirkt ein Umschalten des ersten Ventils gleichzeitig ein Umschalten des zweiten Ventils.

Bevorzugt weist das erste Ventil eine Druckfeder auf. Dabei wird das erste Verschlussteil aufgrund der Kraft der Druckfeder in den zweiten Ventilsitz gedrückt, sodass der zweite Ventilsitz geschlossen ist. Wird hingegen der Elektromagnet aktiviert, so wird das erste Verschlussteil entgegen der Kraft der Feder in den ersten Ventilsitz gedrückt, sodass der erste Ventilsitz verschlossen ist. In diesem Fall ist die erste Ausgangsleitung bevorzugt eine Ausgangsleitung, die zum Bremsen oder zum Schließen einer Tür verwendbar ist. Gleichzeitig ist die zweite Ausgangsleitung bevorzugt eine Ausgangsleitung, die zum Antrieb oder zum Öffnen der Tür verwendbar ist. Durch ein Umschalten des ersten Ventils, insbesondere von einem bestromten in einen unbestromten Zustand, ist insbesondere eine sehr dynamische Druckbeaufschlagung der ersten Ausgangsleitung möglich. Somit ist bevorzugt ein dynamisches Abbremsen der sich öffnenden Tür unter Nutzung der Ölstromenergie ermöglicht. Die dynamische Druckbeaufschlagung der ersten Ausgangsleistung 6 wird durch den Hydraulikdruck verstärkt, da insbesondere die Hochdruckleitung an dem ersten Ventilsitz anliegt. Wird das erste Ventil umgeschaltet, so Addieren sich die Kraft der Druckfeder und der Hydraulikdruck, um das erste Ventil umzuschalten, d.h. in den zweiten Sitz zu pressen.

In einer alternativen bevorzugten Ausführungsform weist das erste Ventil wiederum eine Druckfeder auf, wobei das erste Verschlussteil aufgrund der Kraft der Druckfeder in den ersten Ventilsitz gedrückt wird. Somit ist der erste Ventilsitz aufgrund der Kraft der Druckfeder verschlossen. Durch Aktivieren des Elektromagneten ist das erste Verschlussteil entgegen der Kraft der Druckfeder in den zweiten Ventilsitz drückbar. Somit ist der zweite Ventilsitz verschlossen, wenn der Elektromagnet aktiviert ist. In diesem Fall ist eine sehr dynamische Umschaltung von einer Druckbeaufschlagung der ersten Ausgangsleitung zu einer Druckbeaufschlagung der zweiten Ausgangsleitung ermöglicht. Dabei ist die zweite Ausgangsleitung bevorzugt eine Ausgangsleitung zum Bremsen einer Tür, während die erste Ausgangsleitung bevorzugt als Ausgangsleitung zum Antreiben der Tür verwendbar ist. Für eine sehr dynamische Umschaltmöglichkeit sind insbesondere unterschiedlich groß ausgelegte Ventilsitzdurchmesser vorgesehen, wodurch Differenzflächenverhältnisse geschaffen sind, mit denen der interne Hydraulikfluidstrom zur direkten Umschaltung des ersten Ventils und des zweiten Ventils schnelle Schaltgeschwindigkeiten bei hohen Hubkräften ermöglicht.

Besonders bevorzugt ist vorgesehen, dass zwischen dem ersten Verschlussteil und dem Elektromagnet ein Stößel angeordnet ist. Dabei ist eine dem ersten Ventil zugewandte Stirnfläche des Stößels innerhalb eines Ventildruckraums angeordnet. Der Ventildruckraum ist mit der Hochdruckleitung verbunden. Außerdem ist bevorzugt vorgesehen, dass ausschließlich die dem ersten Ventil zugewandte Stirnfläche des Stößels innerhalb des Ventildruckraums angeordnet ist. Auf diese Weise verstärkt ein Druck der Hochdruckleitung auf die Stirnfläche des Stößels die Wirkung der Druckfeder. Damit wird ein Umschalten des ersten Ventils schneller und zuverlässiger ermöglicht.

Weiterhin ist vorteilhafterweise vorgesehen, dass der Kolben durch eine Feder vorgespannt ist. Die Feder bewirkt insbesondere, dass das zweite Verschlussteil in den dritten Ventilsitz gedrückt wird.

Die Erfindung betrifft außerdem eine Antriebssteuereinheit, die ein zuvor beschriebenes Hydraulikventil und eine Pumpe umfasst. Die Pumpe ist zwischen der Hochdruckleitung und der Niederdruckleitung angeordnet, wobei mit der Pumpe Hydraulikfluid von der Niederdruckleitung in die Hochdruckleitung pumpbar ist. Besonders bevorzugt ist die Pumpe elektrisch betreibbar. Außerdem ist vorgesehen, dass eine Förderrichtung der Pumpe stets dieselbe ist, sodass die Pumpe in ihrer Förderrichtung nicht umschaltbar sein muss, insbesondere nicht umschaltbar ist.

Die Antriebssteuereinheit zeichnet sich außerdem bevorzugt dadurch aus, dass die Niederdruckleitung einen Tankanschluss aufweist. Über den Tankanschluss ist ein Vorratstank mit der Niederdruckleitung verbindbar. Somit ist bevorzugt ein Volumenausgleich realisiert.

Schließlich ist für die Antriebssteuereinheit vorgesehen, dass die Hochdruckleitung bevorzugt ein Rückschlagventil aufweist. Mit dem Rückschlagventil ist insbesondere ein Fluidstrom in Richtung der Pumpe sperrbar. Somit ist einerseits die Pumpe vor einem Rückstrom schützbar, andererseits erlaubt das Rückschlagventil ein Halten der jeweils mit der Hochdruckleitung verbundenen ersten Ausgangsleitung oder zweiten Ausgangsleitung unter hohem Druck. So ist insbesondere die Pumpe abschaltbar, wodurch das Rückschlagventil die Hochdruckleitung sperrt. Gleichzeitig bleibt der hohe Druck in der von dem ersten Ventil und dem zweiten Ventil derzeit geschalteten ersten Ausgangsleitung oder zweiten Ausgangsleitung bestehen. Auf diese Weise ist es insbesondere ermöglicht, eine Tür in einem offenen oder in einem geschlossenen Zustand festzuhalten.

Schließlich betrifft die Erfindung einen Türantrieb, wobei der Türantrieb insbesondere ein Drehtürantrieb ist. Der Türantrieb umfasst ein Hydraulikventil, wie zuvor beschrieben, und/oder eine Antriebssteuereinheit, wie ebenfalls zuvor beschrieben. Der Türantrieb weist einen ersten Druckraum auf, der mit der ersten Ausgangsleitung verbunden ist, und weist einen zweiten Druckraum auf, der mit der zweiten Ausgangsleitung verbunden ist. Dabei ist eine Tür von dem Türantrieb durch Beaufschlagen des ersten Druckraums oder des zweiten Druckraums mit Hydraulikdruck bewegbar. Durch Beaufschlagen des jeweils anderen Druckraums mit Hydraulikdruck ist die Tür bevorzugt in die entgegengesetzte Richtung bewegbar. Somit steht ein Türantrieb zur Verfügung, mit dem eine Tür in zwei Richtungen bewegbar ist. Damit ist insbesondere erreicht, dass eine Tür aktiv geöffnet und aktiv geschlossen werden kann. Das erlaubt insbesondere, dass eine Tür bei Detektierung von Hindernissen oder Personen im Bewegungsbereich der Tür sehr schnell abgestoppt werden kann. Auf diese Weise sind Beschädigungen von Hindernissen oder Personenkontakte vermeidbar. Ebenso wird durch den aktiven Antrieb der Tür in zumindest zwei Richtungen eine Windlastregelung ermöglicht, d. h., die Tür kann insbesondere bei Auftreten von starken Windböen sicher und zuverlässig geschlossen werden.

Die Erfindung wird nun anhand von Ausführungsbeispielen, unter Berücksichtigung der beigefügten Zeichnungen im Detail beschrieben. Dabei zeigen:
- Figur 1: eine schematische Ansicht eines ersten Schaltzustands des Hydraulikventils des Türantriebs gemäß einem ersten Ausführungsbeispiel der Erfindung,
- Figur 2: eine schematische Ansicht eines zweiten Schaltzustands des Hydraulikventils des Türantriebs gemäß dem ersten Ausführungsbeispiel der Erfindung,
- Figur 3: eine schematische Ansicht eines ersten Schaltzustands des Hydraulikventils des Türantriebs gemäß einem zweiten Ausführungsbeispiel der Erfindung, und
- Figur 4: eine schematische Ansicht eines zweiten Schaltzustands des Hydraulikventils des Türantriebs gemäß dem zweiten Ausführungsbeispiel.

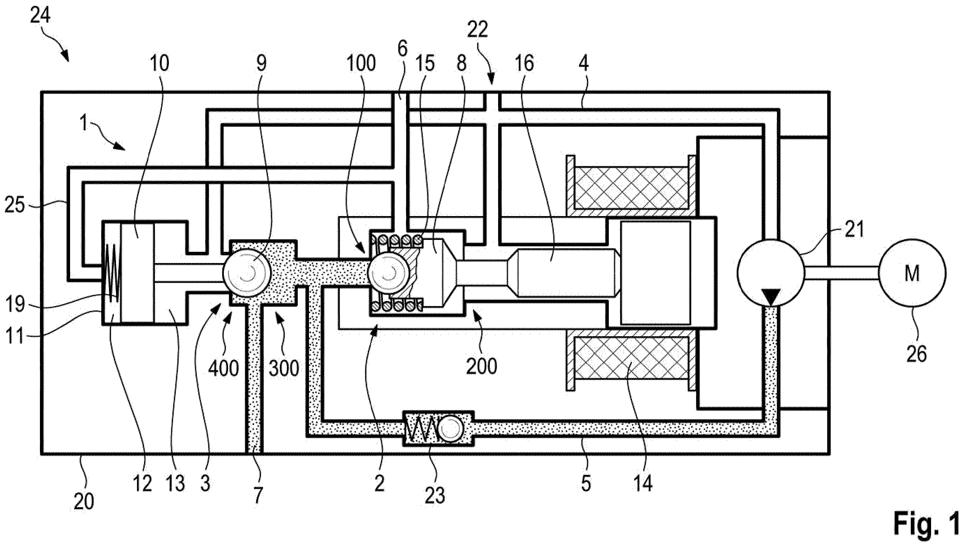

Figur 1 zeigt eine Antriebssteuereinheit 20 eines Türantriebs 24. Die Antriebssteuereinheit 20 umfasst eine Pumpe 21, die Hydraulikfluid von einer Niederdruckleitung 4 zu einer Hochdruckleitung 5 fördert. Die Pumpe 21 wird bevorzugt von einem Elektromotor 26 angetrieben.

Weiterhin umfasst die Antriebssteuereinheit 20 ein Hydraulikventil 1. Das Hydraulikventil 1 wiederum umfasst ein erstes Ventil 2 und ein zweites Ventil 3. Das erste Ventil 2 weist einen ersten Ventilsitz 100 und einen zweiten Ventilsitz 200 auf, während das zweite Ventil 3 einen dritten Ventilsitz 300 und einen vierten Ventilsitz 400 aufweist. Die Hochdruckleitung 5 ist mit dem ersten Ventilsitz 100 und mit dem dritten Ventilsitz 300 verbunden, während die Niederdruckleitung 4 mit dem zweiten Ventilsitz 200 und mit dem vierten Ventilsitz 400 verbunden ist.

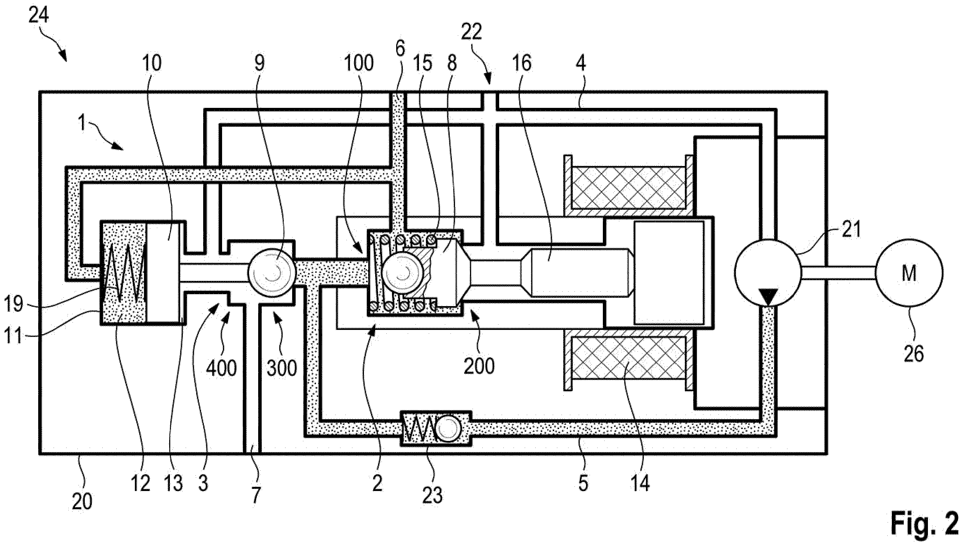

Außerdem weist das erste Ventil 2 eine erste Ausgangsleitung 6 auf, während das zweite Ventil 3 eine zweite Ausgangsleitung 7 aufweist. Die erste Ausgangsleitung 6 ist mit einem nicht gezeigten ersten Druckraum des Türantriebs 24 verbunden, während die zweite Ausgangsleitung 7 mit einem nicht gezeigten zweiten Druckraum des Türantriebs 24 verbunden ist. Durch Beaufschlagung des ersten Druckraums oder des zweiten Druckraums mit Hydraulikdruck ist eine mit dem Türantrieb 24 verbundene Tür bewegbar. Durch die Verbindung der einzelnen Ventilsitze 100, 200, 300, 400 mit der Hochdruckleitung 5 oder der Niederdruckleitung 4 ist somit wechselweise ein hoher Druck oder ein niedriger Druck in den ersten Druckraum oder den zweiten Druckraum einbringbar. Zur Wahl, welcher Druck in welcher der Ausgangsleitungen 6, 7 anliegen soll, ist das erste Ventil 2 als ein umschaltbares Magnetventil gebildet. Das erste Ventil 2 umfasst somit einen Elektromagneten 14, der über einen Stößel 16 mit einem ersten Verschlussteil 8 verbunden ist. Das erste Verschlussteil 8 wird von einer Druckfeder 15 in den zweiten Ventilsitz 200 gedrückt und ist durch Ansteuern des Elektromagneten 14 entgegen der Kraft der Druckfeder 15 in den ersten Ventilsitz 100 drückbar. Somit ist durch Aktivieren des Elektromagneten 14, d. h. durch Beaufschlagen des Elektromagneten 14 mit elektrischem Strom das erste Ventil 2 umschaltbar, sodass nicht mehr der zweite Ventilsitz 200 sondern der erste Ventilsitz 100 abgedichtet ist. Diese Stellung ist in Figur 1 gezeigt. Dahingegen zeigt Figur 2 eine Stellung, in der der Elektromagnet 14 nicht aktiviert, d. h., nicht bestromt ist. In diesem Fall drückt die Druckfeder 15 das erste Verschlussteil 8 in den zweiten Ventilsitz 200, sodass der erste Ventilsitz 100 geöffnet ist. Wie aus den Figuren 1 und 2 ersichtlich ist, ist in der in Figur 1 gezeigten Stellung des ersten Ventils 2 die erste Ausgangsleitung 6 mit der Niederdruckleitung 4 verbunden, während in der in Figur 2 gezeigten Stellung des ersten Ventils 2 die erste Ausgangsleitung 6 mit der Hochdruckleitung 5 verbunden ist.

Mit dem zweiten Ventil 3 ist die zweite Ausgangsleitung 7 umschaltbar. Dabei ist das zweite Ventil 3 an das erste Ventil 2 gekoppelt. Diese Koppelung erfolgt in Form einer Steuerleitung 25. Die Steuerleitung 25 verbindet die erste Ausgangsleitung 6 mit einem ersten Kammerbereich 12 einer Druckkammer 11, in der ein Kolben 10 geführt ist. Der Kolben 10 ist mit einem zweiten Verschlussteil 9 verbunden, wobei das zweite Verschlussteil 9 wahlweise den ersten Ventilsitz 300 oder den zweiten Ventilsitz 400 verschließt. Ein zweiter Kammerbereich 13, der auf der gegenüber liegenden Seite des Kolbens 10 innerhalb der Druckkammer 11 angeordnet ist, ist mit der Niederdruckleitung 4 verbunden. Außerdem ist eine Feder 19 vorhanden, die den Kolben 10 und damit das zweite Verschlussteil 9 in den dritten Ventilsitz 300 drückt.

In der in Figur 1 gezeigten Stellung des Hydraulikventils 1 ist, wie zuvor beschrieben wurde, die erste Ausgangsleitung 6 mit der Niederdruckleitung 4 verbunden. Damit ist auch der erste Kammerbereich 12 der Druckkammer 11 mit der Niederdruckleitung 4 verbunden, sodass der Kolben 10 drucklos ist. Da der dritte Ventilsitz 300 mit der Hochdruckleitung 5 verbunden ist, wird das zweite Verschlussteil 9 von dem Druck innerhalb der Hochdruckleitung 5 in den zweiten Ventilsitz 400 gedrückt. Somit ist die zweite Ausgangsleitung 7 mit der Hochdruckleitung 5 verbunden.

Durch die Steuerleitung 25 wird das zweite Ventil 3 stets dann geschaltet, wenn das erste Ventil 2 geschaltet wird, d. h., wenn sich der Druck innerhalb der ersten Ausgangsleitung 6 ändert. Dieses ist schematisch in Figur 2 dargestellt. Wird das erste Ventil 2 durch deaktivieren des Elektromagneten 14 von der in Figur 1 gezeigten Stellung zu der in Figur 2 gezeigten Stellung überführt, so ändert sich der Druck innerhalb der ersten Ausgangsleitung 6 von Niederdruck auf Hochdruck. Gleichzeitig wird über die Steuerleitung 25 auch der erste Kammerbereich 12 in Hochdruck versetzt. Auf diese Weise wird das zweite Verschlussteil 9 in den dritten Ventilsitz 300 gedrückt. Somit findet eine Umschaltung des zweiten Ventils 3 statt. Daher ist die zweite Ausgangsleitung 7 nun mit der Niederdruckleitung 4 verbunden.

Das erste Ausführungsbeispiel wird insbesondere derart verwendet, dass der mit der ersten Ausgangsleitung 6 verbundene erste Druckraum für eine Schließbewegung der Tür verwendbar ist, während der mit der zweiten Ausgangsleitung 7 verbundene zweite Druckraum für eine Öffnungsbewegung der Tür verwendbar ist. Somit ist ersichtlich, dass der Türantrieb 24 die Tür in sowohl Öffnungsrichtung als auch Schließrichtung aktiv bewegen kann. Somit ist insbesondere auch ein sehr schnelles Abstoppen einer Türbewegung möglich. Ein Umschalten von Schließen zu Öffnen der Tür erfolgt dabei lediglich durch die Hubkraft des Elektromagneten 14. Ein Umschalten von Öffnen zu Schließen der Tür erfolgt lediglich durch die Federkraft der Druckfeder 15. Insbesondere ist so ein Umschalten der Pumpe 21, d. h., ein Ändern der Förderrichtung, nicht notwendig.

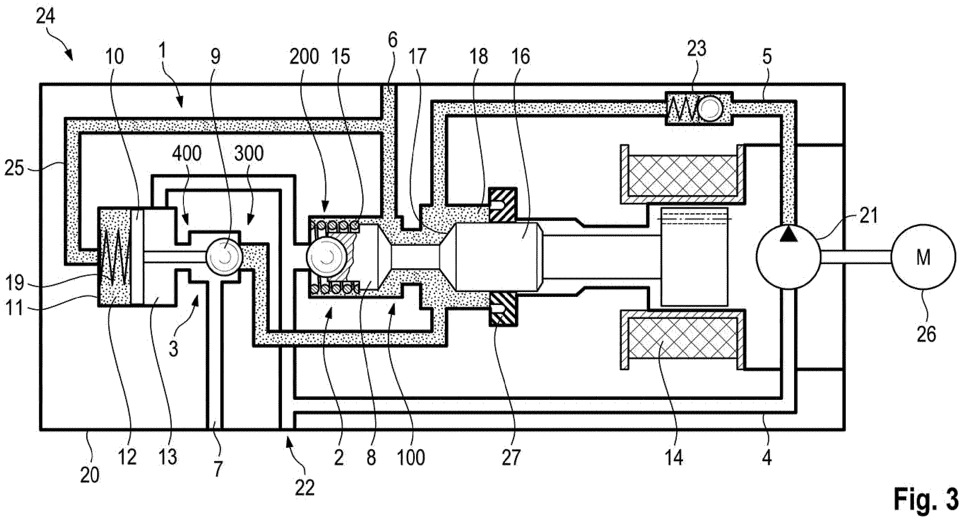

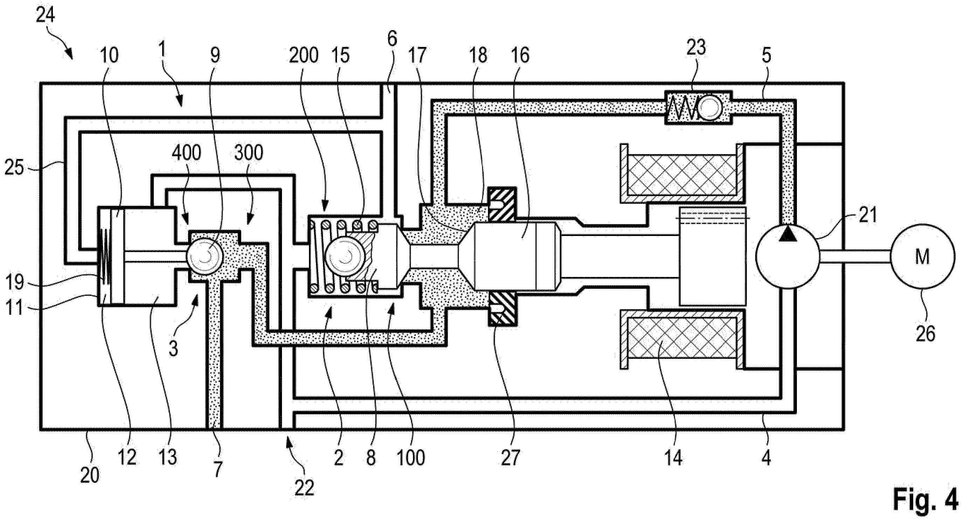

Die Figuren 3 und 4 zeigen ein zweites Ausführungsbeispiel des Türantriebs 24, wobei das zweite Ausführungsbeispiel neben der reinen Hubkraft des Elektromagneten 14 oder der Federkraft der Druckfeder 15 über das Differenzflächenverhältnis auch den bereits vorhandenen Hydraulikdruck zum Umschalten verwendet. Auf diese Weise ist eine sehr dynamische und zuverlässige Umschaltung der Drücke innerhalb der ersten Ausgangsleitung 6 und der zweiten Ausgangsleitung 7 möglich. In dem zweiten Ausführungsbeispiel zeigen gleiche Bezugszeichen an, dass es sich um gleiche oder gleichartige Bauelemente wie im ersten Ausführungsbeispiel handelt.

Grundsätzlich verwendet der Türantrieb 24, die Antriebssteuereinheit 20 und das Hydraulikventil 1 gemäß dem zweiten Ausführungsbeispiel dieselben Bauelemente wie in dem ersten Ausführungsbeispiel. Ein Unterschied besteht darin, dass der Stößel 16 eine Stirnfläche 17 aufweist, die zu dem ersten Ventil 2 zeigt. Diese Stirnfläche 17 ist innerhalb eines Druckraums 18 angeordnet, wobei der Druckraum 18 mit der Hochdruckleitung 5 verbunden ist. Ein weiterer Unterschied liegt darin, das mit der Druckfeder 15 das erste Verschlussteil 8 in den ersten Ventilsitz 100 drückbar ist und nicht, wie im ersten Ausführungsbeispiel, in den zweiten Ventilsitz 200. In den zweiten Ventilsitz 200 ist das erste Verschlussteil 8 gemäß dem zweiten Ausführungsbeispiel lediglich durch Aktivieren des Elektromagneten 14 drückbar. Dieser Zustand ist in Figur 3 gezeigt. Figur 4 wiederum zeigt einen Zustand, in dem der Elektromagnet 14 deaktiviert, d. h., nicht bestromt ist. Zusätzlich zu der Funktion des ersten Ausführungsbeispiels wird bei dem zweiten Ausführungsbeispiel auf die Stirnfläche 17 des Stößels 16 ein Druck aus der Hochdruckleitung 5 ausgeübt. Dieser Druck wirkt in dieselbe Richtung wie die Druckfeder 15. Dieses bedeutet, dass bei einem Deaktivieren des Elektromagneten 14 sowohl die Druckfeder 15 als auch der Druck innerhalb des Druckraumes 18 das erste Verschlussteil 8 in den ersten Ventilsitz 100 drücken. Somit findet ein sehr dynamisches und zuverlässiges Umschalten statt.

Bezüglich des zweiten Ventils 3 ist außerdem vorgesehen, dass durch unterschiedlich groß ausgelegte Durchmesser des dritten Ventilsitzes 300 und des vierten Ventilsitzes 400 Differenzflächenverhältnisse geschaffen werden, mit denen der Hydraulikfluidstrom zur direkten Umschaltung der Ventile 2, 3 schnelle Schaltgeschwindigkeiten bei hohen Hubkräften ermöglicht.

Das zweite Ausführungsbeispiel wird insbesondere derart verwendet, dass der mit der ersten Ausgangsleitung 6 verbundene erste Druckraum ein Öffnen der Tür bewirkt, während ein mit der zweiten Ausgangsleitung 7 verbundener zweiter Druckraum für eine Schließbewegung der Tür verwendbar ist. Somit ist die Bewegung der Tür durch den Türantrieb 24 gemäß dem zweiten Ausführungsbeispiel sehr dynamisch von Öffnen zu Schließen umschaltbar. Dabei wird neben der Kraft der Druckfeder 15 auch der bereits vorhandene Hydraulikdruck innerhalb der Hochdruckleitung 5 verwendet.

In beiden Ausführungsbeispielen ist identisch, dass stets der Elektromagnet 14 bestromt werden muss, wenn eine Tür angetrieben oder geöffnet werden soll. Wenn die Tür abgebremst oder, insbesondere aktiv, geschlossen werden soll, dann muss der Elektromagnet 14 unbestromt bleiben. In dem ersten Ausführungsbeispiel führt ein Bestromen des Elektromagneten 14 zu einer Druckbeaufschlagung der zweiten Ausgangsleitung 7, während bei dem zweiten Ausführungsbeispiel ein Bestromen des Elektromagneten 14 zu einer Druckbeaufschlagung der ersten Ausgangsleitung 6 führt. Somit ist in dem ersten Ausführungsbeispiel die zweite Ausgangsleitung 7 eine Antriebsleitung oder Öffnungsleitung, während in dem zweiten Ausführungsbeispiel die erste Ausgansleitung 6 einer Antriebsleitung oder eine Öffnungsleitung ist.

Die Erfindung, wie sie in den beiden Ausführungsbeispielen dargestellt ist, ermöglicht damit durch eine aktive Umschaltung der Bewegungsrichtung eine Kontrolle der Türbewegung sowohl in Öffnungsrichtung als auch in Schließrichtung. Damit sind Kontakte der Tür mit Personen oder Beschädigungen der Tür aufgrund von Hindernissen weitgehend vermieden. Insbesondere ist ein wechselweises Umschalten zwischen der ersten Ausgangsleitung 6 und der zweiten Ausgangsleitung 7 auch bei maximalem Druck der Pumpe 21 möglich. Somit muss nicht abgewartet werden, bis eine Druckreduktion oder eine Druckumkehr durch Abschalten oder Umschalten der Pumpe 21 erfolgt.

Die Antriebssteuereinheit 20 ist bevorzugt in einer kompakten Patronenbauweise ausgeführt. Dadurch ist eine sehr schmale Bauweise für den Türantrieb 24 ermöglicht.

Für das erste Ausführungsbeispiel und das zweite Ausführungsbeispiel ist außerdem ein Rückschlagventil 23 innerhalb der Hochdruckleitung 5 vorgesehen. Mit dem Rückschlagventil 23 ist einerseits verhinderbar, dass Hydraulikfluid zu der Pumpe 21 durch die Hochdruckleitung 5 strömt. Andererseits dient das Rückschlagventil 23 zur Realisierung einer Haltefunktion der Tür. Dabei ist vorgesehen, dass ein hoher Druck in der ersten Ausgangsleitung 6 oder in der zweiten Ausgangsleitung 7 gehalten wird, um die Tür festzustellen. Um einen derartigen Zustand auch über längere Zeiträume gewährleisten zu können, ist bevorzugt vorgesehen, dass die Pumpe 21 deaktiviert wird. Dieses bedeutet, dass kein Hydraulikfluid von der Niederdruckleitung 4 zu der Hochdruckleitung 5 gefördert wird. Gleichzeitig wird durch das Rückschlagventil 23 sichergestellt, dass der vorhandene Hochdruck innerhalb der ersten Ausgangsleitung 6 oder der zweiten Ausgangsleitung 7 nicht abgebaut wird. Somit ist eine sichere und zuverlässige Haltefunktion der Tür realisiert.

### Bezugszeichenliste

- 1: Hydraulikventil
- 2: erstes Ventil
- 3: zweites Ventil
- 4: Niederdruckleitung
- 5: Hochdruckleitung
- 6: erste Ausgangsleitung
- 7: zweite Ausgangsleitung
- 8: erstes Verschlussteil
- 9: zweites Verschlussteil
- 10: Kolben
- 11: Druckkammer
- 12: erster Kammerbereich
- 13: zweiter Kammerbereich
- 14: Elektromagnet
- 15: Druckfeder
- 16: Stößel
- 17: Stirnfläche des Stößels
- 18: Ventildruckraum
- 19: Feder
- 20: Antriebssteuereinheit
- 21: Pumpe
- 22: Tankanschluss
- 23: Rückschlagventil
- 24: Türantrieb
- 25: Steuerleitung
- 26: Elektromotor

- 100: erster Ventilsitz
- 200: zweiter Ventilsitz
- 300: dritter Ventilsitz
- 400: vierter Ventilsitz

## Patentansprüche

1. Hydraulikventil (1), umfassend ein erstes Ventil (2) und ein zweites Ventil (3), sowie eine Niederdruckleitung (4) und eine Hochdruckleitung (5), wobei
- das erste Ventil (2) einen ersten Ventilsitz (100) und einen zweiten Ventilsitz (200) aufweist, wobei der erste Ventilsitz (100) und der zweite Ventilsitz (200) durch ein erstes Verschlussteil (8) wechselweise verschließbar sind, sodass der jeweils geöffnete Ventilsitz (100, 200) des ersten Ventils (2) mit einer ersten Ausgangsleitung (6) hydraulisch verbunden ist;
- das zweite Ventil (3) einen dritten Ventilsitz (300) und einen vierten Ventilsitz (400) aufweist, wobei der dritte Ventilsitz (300) und der vierte Ventilsitz (400) durch ein zweites Verschlussteil (9) wechselweise verschließbar sind, sodass der jeweils geöffnete Ventilsitz (300, 400) des zweiten Ventils (3) mit einer zweiten Ausgangsleitung (7) hydraulisch verbunden ist;
- die Hochdruckleitungen (5) mit dem ersten Ventilsitz (100) und mit dem dritten Ventilsitz (300) verbunden ist;
- die Niederdruckleitung (4) mit dem zweiten Ventilsitz (200) und mit dem vierten Ventilsitz (400) verbunden ist;
- das zweite Verschlussteil (9) von einem Kolben (10) betätigbar ist, wobei der Kolben (10) eine Druckkammer (11) in einen ersten Kammerbereich (12) und in einen zweiten Kammerbereich (13) teilt;
- der zweite Kammerbereich (13) mit dem vierten Ventilsitz (400) verbunden ist,
- **dadurch gekennzeichnet, dass** der erste Kammerbereich (12) mit der ersten Ausgangsleitung (6) verbunden ist.

2. Hydraulikventil (1) nach Anspruch 1, **dadurch gekennzeichnet, dass** das erste Verschlussteil (8) von einem Elektromagneten (14) betätigbar ist.

3. Hydraulikventil (1) nach Anspruch 2, **dadurch gekennzeichnet, dass** das erste Ventil (2) eine Druckfeder (15) aufweist, wobei das erste Verschlussteil (8) aufgrund der Kraft der Druckfeder (15) den zweiten Ventilsitz (200) schließt, und wobei durch Aktivieren des Elektromagneten (14) das erste Verschlussteil (8) und gegen der Kraft der Druckfeder (15) bewegbar ist, bis das erste Verschlussteil (8) den ersten Ventilsitz (100) verschließt.

4. Hydraulikventil (1) nach Anspruch 2, **dadurch gekennzeichnet, dass** das erste Ventil (2) eine Druckfelder (15) aufweist, wobei das erste Verschlussteil (8) aufgrund der Kraft der Druckfeder (15) den ersten Ventilsitz (100) schließt, und wobei durch Aktivieren des Elektromagneten (14) das erste Verschlussteil (8) entgegen der Kraft der Druckfeder (15) bewegbar ist, bis das erster Verschlussteil (8) den zweiten Ventilsitz (200) verschließt.

5. Hydraulikventil (1) nach Anspruch 4, **dadurch gekennzeichnet, dass** zwischen dem erstem Verschlussteil (8) und dem Elektromagnet (14) ein Stößel (16) angeordnet ist, wobei eine, dem ersten Ventil (2) zugewandte, Stirnfläche (17) des Stößel (16) innerhalb eines mit der Hochdruckleitung (5) verbundenen Ventildruckraums (18) angeordnet ist.

6. Hydraulikventil (1) nach einem der vorgehenden Ansprüche, **dadurch gekennzeichnet, dass** der Kolben (10) durch eine Feder (19) vorgespannt ist.

7. Antriebssteuereinheit (20), umfassend ein Hydraulikventil (1) nach einem der vorhergehenden Ansprüche und eine Pumpe (21), wobei die Pumpe (21) zwischen der Hochdruckleitung (5) und der Niederdruckleitung (49 angeordnet ist und wobei mit der Pumpe (21) Hydraulikfluid von der Niederdruckleitung (4) in die Hochdruckleitung (5) pumpbar ist.

8. Antriebssteuereinheit (20) nach Anspruch 7, **dadurch gekennzeichnet, dass** die Niederdruckleitung (4) einen Tankanschluss (22) aufweist, über den ein Vorratstank mit der Niederdruckleitung (4) verbindbar ist.

9. Antriebssteuereinheit (20) nach Anspruch 7 oder Anspruch 8, **dadurch gekennzeichnet, dass** die Hochdruckleitung (5) ein Rückschlagventil (23) aufweist, wobei mit dem Rückschlagventil (23) ein Fluidstrom in Richtung der Pumpe (21) sperrbar ist.

10. Türantrieb (24), insbesondere Drehtürantrieb, umfassend ein Hydraulikventil (1) nach einem der Ansprüche 1 bis 6, und/oder eine Antriebssteuereinheit nach einem der Ansprüche 7 bis 9, wobei der Türantrieb (24) einen mit der ersten Ausgangsleitung (6) verbundenen ersten Druckraum und einen mit der zweiten Ausgangsleitung (7) verbundenen zweiten Druckraum umfasst, und wobei eine Tür durch Beaufschlagen des ersten Druckraums oder des zweiten Druckraums mit Hydraulikdruck bewegbar ist.

## Claims

1. A hydraulic valve (1), comprising a first valve (2) and a second valve (3), as well as a low pressure line (4) and a high pressure line (5), wherein
• the first valve (2) includes a first valve seat (100) and a second valve seat (200), wherein the first valve seat (100) and the second valve seat (200) are alternatingly closable by means of a first closing part (8), so that the respectively opened valve seat (100, 200) of the first valve (2) is hydraulically connected to a first outlet line (6);
• the second valve (3) includes a third valve seat (300) and a fourth valve seat (400), wherein the third valve seat (300) and the fourth valve seat (400) are alternatingly closable by means of a second closing part (9), so that the respectively opened valve seat (300, 400) of second valve (3) is hydraulically connected to a second outlet line (7);
• the high pressure line (5) is connected to the first valve seat (100) and to the third valve seat (300);
• the low pressure line (4) is connected to the second valve seat (200) and to the fourth valve seat (400);
• the second closing part (9) is actuatable by a piston (10), wherein the piston (10) divides a pressure chamber (11) into a first chamber area (12) and into a second chamber area (13);
• the second chamber area (13) is connected to the fourth valve seat (400),
**characterized in that** the first chamber area (12) is connected to the first outlet line (6).

2. The hydraulic valve (1) according to claim 1, **characterized in that** the first closing part (8) is actuatable by an electric magnet (14).

3. The hydraulic valve (1) according to claim 2, **characterized in that** the first valve (2) includes a pressure spring (15), wherein the first closing part (8) based on the force of the pressure spring (15) closes the second valve seat (200), and wherein, by activating the electric magnet (14), the first closing part (8) is movable against the force of the pressure spring (15) until the first closing part (8) closes the first valve seat (100).

4. The hydraulic valve (1) according to claim 2, **characterized in that** the first valve (2) includes a pressure spring (15), wherein the first closing part (8) based on the force of the pressure spring (15) closes the first valve seat (100), and wherein, by activating the electric magnet (14), the first closing part (8) is movable against the force of the pressure spring (15), until the first closing part (8) closes the second valve seat (200).

5. The hydraulic valve (1) according to claim 4, **characterized in that** a tappet (16) is disposed between the first closing part (8) and the electric magnet (14), wherein a frontal face (17) of the tappet (16) facing the first valve (2) is disposed within a valve pressure compartment (18) connected to the high pressure line (5).

6. The hydraulic valve (1) according to any of the preceding claims, **characterized in that** the piston (10) is pretensioned by a spring (19).

7. A drive control unit (20), comprising a hydraulic valve (1) according to any of the preceding claims and a pump (21), wherein the pump (21) is disposed between the high pressure line (5) and the low pressure line (4), and wherein hydraulic fluid is pumpable from the low pressure line (4) into the high pressure line (5) by the pump (21).

8. The drive control unit (20) according to claim 7, **characterized in that** the low-pressure line (4) includes a reservoir connection (22), via which a feeding reservoir is connectable to the low-pressure line (4).

9. The drive control unit (20) according to claim 7 or claim 8, **characterized in that** the high pressure line (5) includes a non-return valve (23), wherein a fluid flow in the direction of the pump (21) is blockable with the non-return valve (23).

10. A door drive (24), in particular a swing door drive, comprising a hydraulic valve (1) according to any of the claims 1 to 6, and/or a drive control unit according to any of the claims 7 to 9, wherein the door drive (24) comprises a first pressure compartment connected to the first outlet line (6) and a second pressure compartment connected to the second outlet line (7), and wherein a door is movable by charging with hydraulic pressure the first pressure compartment or the second pressure compartment.

## Revendications

1. Soupape hydraulique (1), comportant une première soupape (2) et une deuxième soupape (3), de même qu'une conduite à basse pression (4) et une conduite à haute pression (5), dans laquelle
• la première soupape (2) comprend un premier siège de soupape (100) et un deuxième siège de soupape (200), le premier siège de soupape (100) et le deuxième siège de soupape (200) étant fermables réciproquement par une première part de fermeture (8) de sorte que le siège de soupape respectivement ouvert (100, 200) de la première soupape (2) est connecté hydrauliquement à une première conduite de sortie (6) ;
• la deuxième soupape (3) comprend un troisième siège de soupape (300) et un quatrième siège de soupape (400), le troisième siège de soupape (300) et le quatrième siège de soupape (400) étant fermables réciproquement par une deuxième part de fermeture (9) de sorte que le siège de soupape respectivement ouvert (300, 400) de la deuxième soupape (3) est connecté hydrauliquement à une deuxième conduite de sortie (7) ;
• la conduite à haute pression (5) est connectée au premier siège de soupape (100) et au troisième siège de soupape (300) ;
• la conduite à basse pression (4) est connectée au deuxième siège de soupape (200) et au quatrième siège de soupape (400) ;
• la deuxième part de fermeture (9) étant actionnable par un piston (10), le piston (10) divisant un compartiment de pression (11) en une première région de compartiment (12) et en une deuxième région de compartiment (13) ;
• la deuxième région de compartiment (13) est connectée au quatrième siège de soupape (400),
**caractérisée en ce que** la première région de compartiment (12) est connectée à la première conduite de sortie (6).

2. Soupape hydraulique (1) selon la revendication 1, **caractérisée en ce que** la première part de fermeture (8) est actionnable par un électroaimant (14).

3. Soupape hydraulique (1) selon la revendication 2, **caractérisée en ce que** la première soupape (2) comprend un ressort de pression (15), la première part de fermeture (8) en raison de la force du ressort de pression (15) ferme le deuxième siège de soupape (200), et en activant l'électroaimant (14) la première part de fermeture (8) étant déplaçable contre la force du ressort de pression (15) jusqu'à ce que la première part de fermeture (8) ferme le premier siège de soupape (100).

4. Soupape hydraulique (1) selon la revendication 2, **caractérisée en ce que** la première soupape (2) comprend un ressort de pression (15), la première part de fermeture (8) en raison de la force du ressort de pression (15) fermant le premier siège de soupape (100), et en activant l'électroaimant (14) la première part de fermeture (8) étant déplaçable contre la force du ressort de pression (15) jusqu'à ce que la première part de fermeture (8) ferme le deuxième siège de soupape (200).

5. Soupape hydraulique (1) selon la revendication 4, **caractérisée en ce qu'**un poussoir (16) est agencé entre la première part de fermeture (8) et l'électroaimant (14), une face frontale (17) du poussoir (16) orientée vers la première soupape (2) étant agencée à l'intérieur d'une chambre de pression de soupape (18) connectée à la conduite à haute pression (5).

6. Soupape hydraulique (1) selon l'une des revendications précédentes, **caractérisée en ce que** le piston (10) est précontraint par un ressort (19).

7. Unité de commande d'entraînement (20), comportant une soupape hydraulique (1) selon l'une des revendications précédentes et une pompe (21), la pompe (21) étant agencée entre la conduite à haute pression (5) et la conduite à basse pression (4) et un fluide hydraulique pouvant être pompé avec la pompe (21) de la conduite à basse pression (4) dans la conduite à haute pression (5).

8. Unité de commande d'entraînement (20) selon la revendication 7, **caractérisée en ce que** la conduite à basse pression (4) comprend un raccord de réservoir (22) par l'intermédiaire duquel un réservoir est connectable à la conduite à basse pression (4).

9. Unité de commande d'entraînement (20) selon la revendication 7 ou la revendication 8, **caractérisée en ce que** la conduite à haute pression (5) comprend une soupape anti-retour (23), un écoulement de fluide en direction de la pompe (21) étant verrouillable par l'intermédiaire de la soupape anti-retour (23).

10. Entraînement de porte (24), tout particulièrement entraînement de porte tournante, comportant une soupape hydraulique (1) selon l'une des revendications 1 à 6, et/ou une unité de commande d'entraînement selon les revendications 7 à 9, l'entraînement de porte (24) comportant un premier espace de pression connecté à la première conduite de sortie (6) et un deuxième espace de pression connecté à la deuxième conduite de sortie (7), et une porte étant déplaçable par chargement du premier espace de pression ou du deuxième espace de pression avec de la pression hydraulique.
